# EUROPÄISCHE PATENTSCHRIFT

(11) **EP 2 550 897 B1**
(45) Veröffentlichungstag und Bekanntmachung des Hinweises auf die Patenterteilung: **28.08.2013**
(21) Anmeldenummer: 11006248.6
(22) Anmeldetag: 29.07.2011
(51) Int. Cl.: A47B 57/54, A47F 3/00, A47F 5/08, E05C 1/08, E05C 17/48, F16B 7/04, F16B 12/02, F16B 12/40

(54) **System zum modularen Aufbau von Theken, insbesondere Verkaufstheken**
System for modular construction of stands, in particular sales stands
Système d'assemblage modulaire de présentoirs, notamment de présentoirs de vente

(43) Veröffentlichungstag der Anmeldung: 30.01.2013
(73) Patentinhaber: Vieler International GmbH + Co. KG, 58642 Iserlohn (DE)
(72) Erfinder: Kallos, Franz, 59581 Warstein (DE)
(74) Vertreter: Patentanwälte Buse, Mentzel, Ludewig

(56) Entgegenhaltungen:
- DE-C1- 19 703 385
- FR-A1- 2 838 767
- US-A- 3 458 052
- US-A- 5 690 239

## Beschreibung

Die Erfindung betrifft ein System zum modularen Aufbau von Theken der im Oberbegriff von Anspruch 1 genannten Art. Derartige Theken finden insbesondere bei Verkaufstheken sowohl für Lebensmittel als auch für andere Gegenstände Verwendung. Heutzutage ist es üblich, derartige Theken als sogenannte Thekenlandschaften aufzubauen, in denen mehrere Thekenelemente nebeneinander angeordnet sind. Diese Elemente können unterschiedliche Formen und Abmessungen aufweisen. Bei solchen Thekenlandschaften ist es wichtig, dass sie ein einheitliches Bild ergeben, außerdem sollen sie je nach Wünschen des Verwenders auch anders angeordnet und/oder erweitert werden können.

Die DE 299 18 469 U 1 beschreibt eine Vorrichtung zur lösbaren kraftschlüssigen Verbindung von Thekenaufbaustützen für Verkaufstheken. Hierzu weist jedes Thekenelement eine Thekenaufbaustütze auf. Eine Profilschiene wird dann formschlüssig über zwei einander benachbarte Thekenaufbaustützen gestülpt, um diese miteinander zu verbinden. Durch diese Vorrichtung ist es jedoch nur möglich, mehrere Verkaufsthekenelemente, die eine rechteckige Grundfläche aufweisen, in Reihe nebeneinander anzuordnen. Es ist nicht vorgesehen, auch Thekenelemente, die keine rechteckige Grundfläche haben, vorzusehen. Auch können nicht verschiedenartige oder - förmige Thekenmodule miteinander kombiniert werden. Darüber hinaus ist die Thekenaufbaustütze optisch störend, da sie dem Kunden den freien Blick auf die verschiedenen Thekenelemente und die darin ausgestellten Waren behindert oder sogar verwehrt.

Das Dokument DE 187 03 385 C 1 zeigt eine Warentheke. Auch bei dem hier beschriebenen Dokument können mehrere Theken aneinander befestigt werden, indem zwei Kernprofile zu einem Doppelkernprofil zusammengefügt werden, welches dann mit einem gemeinsamen Hüllprofil umfasst wird. Hierdurch einstehen dann im Mittelbereich der Theke deutlich dickere Profilelemente, was ebenfalls optisch störend wirkt. Darüber hinaus können auch hier nicht verschieden geformte Thekenelemente, insbesondere Thekenelemente ohne rechteckige Grundfläche, beliebig miteinander kombiniert werden.

Aufgabe der Erfindung ist es daher, ein System zum modularen Aufbau von Theken zu schaffen, welches die vorgenannten Nachteile vermeidet und auf einfache und kostengünstige Art und Weise unterschiedlich geformte Thekenmodule miteinander kombinierbar macht. Diese Aufgabe wird durch die kennzeichnenden Merkmale von Anspruch 1 gelöst, denen folgende besondere Bedeutung zukommt.

Jeder Pfosten besteht aus wenigstens zwei Teilprofilen, nämlich einem rechten und einem linken Teilprofil, welche zusammenbringbar sind und dadurch eine optische Einheit bilden. An ihrem oberen Ende sind die beiden Teilprofile über wenigstens einen oberen Abschluss aneinander festlegbar. Alle rechten und linken Teilprofile sind dabei identisch zueinander und jeder Pfosten des Systems weist die gleiche Dicke auf, unabhängig von der Form und Größe der verwendeten Module. Dabei können Module verschiedenster Form bzw. Grundfläche verwendet werden. Unabhängig von der Form, Größe oder Grundfläche der verschiedenen Module werden gleiche Teilprofile verwendet. So erhält die nach dem erfindungsgemäßen System aufgebaute Theke ein einheitliches Gesamtbild. Besonders vorteilhaft ist es, wenn sämtliche verwendeten zueinander identischen Teilprofile jeweils spiegelverkehrt eingebaut werden, um die rechten und linken Teilprofile zu bilden.

Besonders vorteilhaft ist es, den oberen Abschluss als Kappe auszubilden. Diese kann dann beide Teilprofile über ihren gesamten Querschnitt abdecken. So können beispielsweise Verschmutzungen und Fremdkörper nicht in die Teilprofile gelangen. Die Kappe kann dann Eingriffsmittel aufweisen, welche mit ein oder mehreren Bauteilen jedes der beiden Teilprofile in Eingriff bringbar sind. Zusätzlich oder alternativ können an der Kappe Befestigungsmittel angeordnet werden, die mit ein oder mehreren Aufnahmen jedes der beiden Teilprofile in Wirkverbindung bringbar sind. So kann die Kappe sicher und doch lösbar an den Teilprofilen gehaltert werden. Zusätzlich kann die Kappe noch mit ein oder mehreren Zierelementen versehen werden, je nach gewünschter optischer Ausgestaltung der Theke.

Bevorzugt umfasst der obere Abschluss wenigstens ein oberes Scharnierelement, wie einen Stift oder eine Buchse. Weiterhin ist eine Tür vorgesehen, die ein oberes Gegenscharnierelement besitzt, wie eine Buchse oder einen Stift. Das obere Scharnierelement und das obere Gegenscharnierelement sind in Wirkverbindung bringbar, um ein oberes Scharnier zu bilden, an welchem die Tür im oberen Bereich des Moduls schwenkbar angelenkt ist.

In einer bevorzugten Ausführungsform besitzt jedes Teilprofil an seinem unteren Ende einen unteren halben Abschluss in Form einer Halbrosette. Diese ist wahlweise an einem Korpus des Modules oder an einem Boden, auf welchem die Theke angeordnet ist, befestigbar. Im eingebauten Zustand bilden die beiden Halbrosetten dabei eine ganze Rosette. Dies ist vorteilhaft, da hierdurch automatisch der Eindruck eines vollständigen Bauteils, nämlich des Pfostens entsteht, der aus den beiden Teilprofilen aufgebaut ist.

Weiterhin bevorzugt ist an wenigstens einer der beiden Halbrosetten ein unteres Scharnierelement, wie ein Stift oder einer Buchse angeordnet, wobei auch hier eine Tür vorgesehen ist, die ein unteres Gegenscharnierelement, wie eine Buchse oder einen Stift aufweist. Das untere Scharnierelement und das untere Gegenscharnierelement sind miteinander in Wirkverbindung bringbar, um ein unteres Scharnier zu bilden, durch welches die Tür im unteren Bereich des Moduls schwenkbar angelenkt ist.

Werden ein oberes und ein unteres Scharnier, wie zuvor beschrieben, vorgesehen, so ist die Modultür effektiv lediglich an einem Teilprofil des Modules angeordnet. Um die Austauschbarkeit und Modularität des Gesamtsystems zu vergrößern, werden entsprechende Türen jeweils nur an linken Teilprofilen oder nur an rechten Teilprofilen angelenkt. Selbstverständlich ist auch eine gemischte Anlenkung von Türen an den Modulen denkbar, jedoch geht hierdurch ein Teil der Flexibilität und Modularität verloren.

Der einzige Unterschied bei verschieden geformten Modulen, insbesondere bei Verwendung von rechteckigen und nicht rechteckigen Modulen besteht darin, dass bei der Verwendung von Türen, die oberen und unteren Scharnierelemente am oberen Abschluss bzw. am unteren halben Abschluss an unterschiedlichen Stellen in Bezug auf den Kontaktbereich der beiden Teilprofile angeordnet sind, um den unterschiedlichen Winkelverhältnissen der einzelnen Module gerecht zu werden. Dies beeinflusst aber nicht die Ausgestaltung des entsprechenden Teilprofiles an sich, welches standardmäßig identisch zu allen anderen Teilprofilen ausgebildet ist. Hierdurch werden erhebliche Kosten eingespart. Selbstverständlich können die Türen unterschiedliche Größen aufweisen, um der Größe des entsprechenden Modules angepasst zu sein.

Vorzugsweise bestehen die Teilprofile aus Aluminiumstranggussprofilen. Andere Materialien und Herstellungsarten sind jedoch ebenfalls denkbar. Durch eine Ausgestaltung von identischen rechten und linken Teilprofilen werden erhebliche Kosten eingespart, da die Teilprofile in größeren Stückzahlen gefertigt werden können und nicht mehrere Werkzeuge für die Herstellung der Teilprofile notwendig sind. Auch die Lagerhaltungskosten verringern sich entsprechend.

Weitere Vorteile und Ausführungsbeispiele der Erfindung ergeben sich aus den Unteransprüchen der nachfolgenden Beschreibung sowie den Zeichnungen. In den Zeichnungen ist die Erfindung in einem Ausführungsbeispiel dargestellt. Es zeigen:
- Fig. 1:: eine erfindungsgemäße nach dem System aufgebaute Theke von Kundenseite her,
- Fig. 2:: die Theke aus Fig. 1 von der Bedienerseite aus gesehen,
- Fig. 3:: den Aufbau eines erfindungsgemäßen Pfostens ohne oberen Abschluss mit rechtwinkligen Modulen,
- Fig. 4:: die Pfosten mit oberem Abschluss bei nicht rechtwinkligen Modulen,
- Fig. 5:: einen Pfosten an einem letzten Modul der Theke,
- Fig. 6:: die Bauteile des Pfostens mit oberem Abschluss in Explosionsdarstellung,
- Fig. 7:: ein unterer halber Abschluss eines linken Teilprofils,
- Fig. 8:: ein unterer halber Abschluss eines rechten Teilprofils,
- Fig. 9:: die unteren Bauteile des Pfostens auseinandergezogen,
- Fig. 10:: ein Pfosten eines letzten Moduls mit Zwischenträger,
- Fig. 11:: die Bauteile des Zwischenträgers mit Klemmhalter,
- Fig. 12:: der Zwischenträger mit Klemmhalter und Teilprofil,
- Fig. 13:: der am Teilprofil befestigte Zwischenträger,

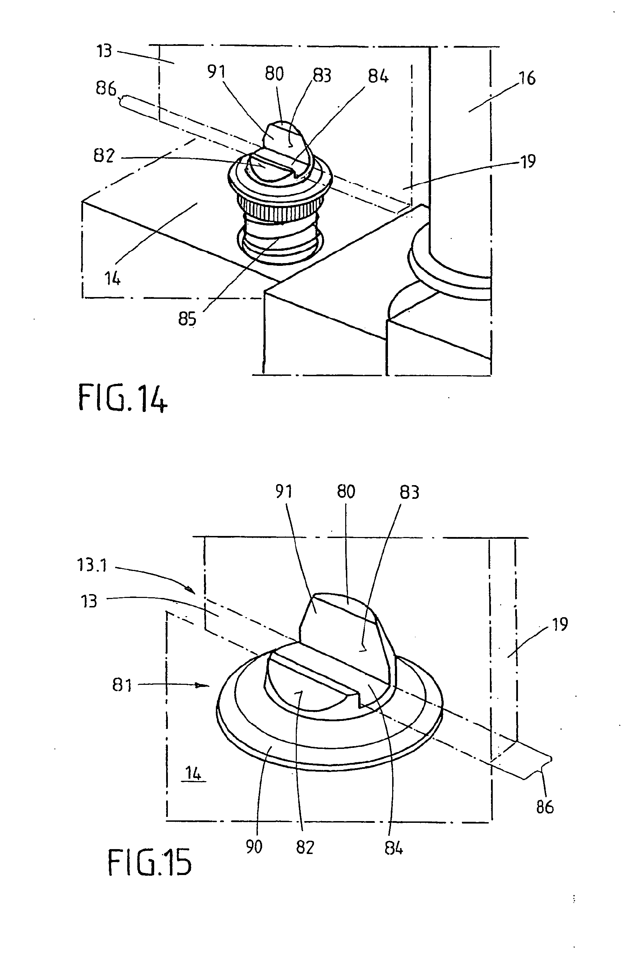

- Fig. 14:: der Aufbau eines als Anschlagknopf ausgebildeten Anschlags,
- Fig. 15:: der Anschlagknopf in eingebautem Zustand,
- Fig. 16:: der Anschlagknopf separat in Seitenansicht.

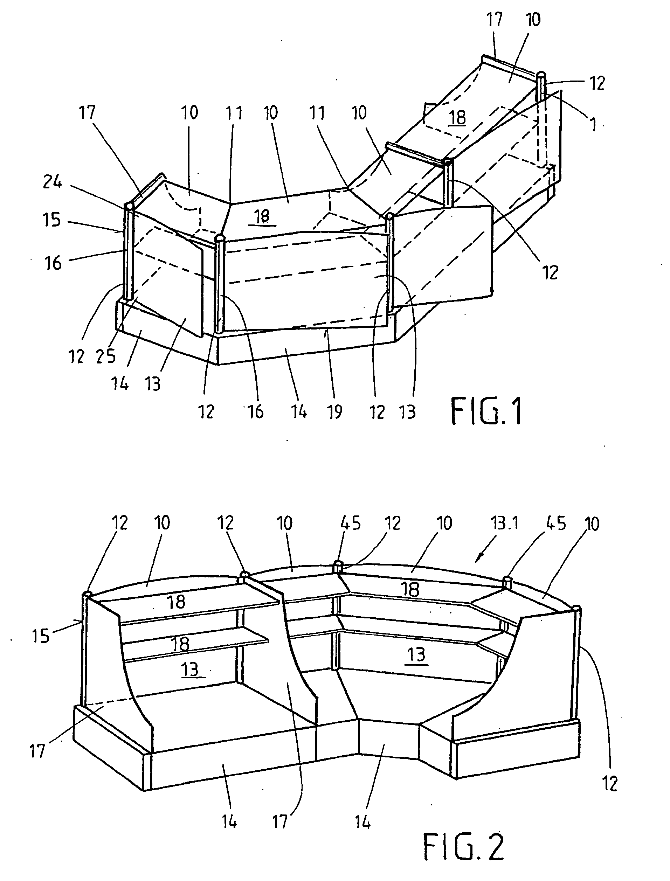

Die Fig. 1 und 2 zeigen eine nach dem erfindungsgemäßen System aufgebaute Thekenlandschaft. Die Thekenlandschaft umfasst vier Module 10, die unterschiedlich ausgebildet sind in Form, Größe und Grundfläche. Jedes Modul 10 besitzt eine Tür 13. Der Korpus 14 jedes Moduls 10 ist im Bereich des Bodens bzw. der Standfläche angeordnet. Alle darüber hinaus ragenden Bauteile, bis auf die Pfosten 12, bestehen aus durchsichtigem Material, beispielsweise Glas. Andere Materialien sind selbstverständlich auch denkbar. Jedes Modul 10 umfasst mehrere Möbelelemente 18, hier jeweils eine Zahlplatte und einen Regalboden. Auch andere Formen von Möbelelementen sind selbstverständlich denkbar. In Fig. 1 sind die Türen 13 der Module 10 geöffnet, während sie in Fig. 2 in ihrer Endposition 13.1 dargestellt sind.

Weiterhin ist erkennbar, dass zwischen zwei Modulen 10 und jeweils am Ende der Thekenlandschaft, also an den letzten beiden Modulen 10, eine Trennscheibe 17 angeordnet ist. Ob und wenn ja, wie viele Trennscheiben 17 an einer Thekenlandschaft angeordnet sind, hängt vom jeweiligen Anwendungsfall ab und unterliegt überwiegend den Anforderungen an den optischen Gesamteindruck.

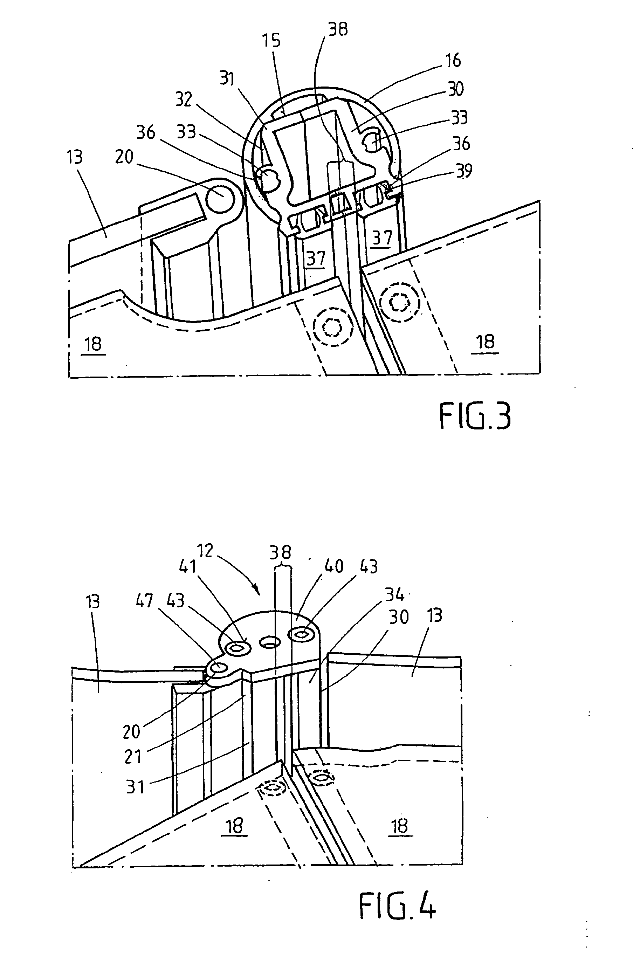

Den Aufbau eines Pfostens 12 zeigt Fig. 3. Man erkennt das rechte Teilprofil 30 und das linke Teilprofil 31, welche identisch zueinander, jedoch spiegelverkehrt zueinander, eingebaut sind. Die Teilprofile 30, 31 berühren sich in ihrem Kontaktbereich 38 und bilden insgesamt ein optisch ansprechendes und einheitliches Gesamtbild. An der Außenseite 15 des Pfostens 12 ist über ungefähr drei Viertel der Umfangsfläche eine Verkleidung 16 vorgesehen. Diese weist hier einen teilkreisförmigen Querschnitt auf. Andere Formen der Verkleidung 16 sind jedoch ebenfalls denkbar. Auch das Material der Verkleidung 16 kann variieren. So kann es sich auch hierbei um ein Aluminiumstranggussprofil handeln, jedoch auch um Kunststoffprofile oder ein Profil aus anderen Materialien, Verbundmaterialien etc. Die äußere Oberfläche der Verkleidung 16 ist nur vom gewünschten optischen Gesamteindruck der Theke abhängig. Eine Vielzahl von Farben, Oberflächen und Formen ist hier denkbar. Die Verkleidung 16 ist auf den Pfosten 12 in diesem Ausführungsbeispiel aufgeclipst.

Des Weiteren erkennt man die Tür 13, die ein oberes Gegenscharnierelement 20, hier eine Buchse, umfasst. Der genauere Aufbau der Tür 13, sowie der Scharniere 21, 23 wird später noch erklärt werden.

Des Weiteren erkennt man, dass beide Teilprofile 30, 31 über jeweils eine Profilnut 36 verfügen. Diese ist zumindest teilweise, hier vollständig hinterschnitten 39. Die Profilnut 36 wird von einem Abdeckprofil 37 verdeckt, um sie vor Verschmutzungen zu schützen und den optischen Gesamteindruck des Pfostens 12 als ein zusammenhängendes Bauteil, zu verbessern.

Des Weiteren erkennt man noch die beiden Aufnahmen 33, die in jedem der beiden Teilprofile 30, 31 angeordnet sind. Deren genaue Verwendung wird aus Fig. 4 deutlich.

In Fig. 4 ist wieder ein Pfosten 12 dargestellt, diesmal jedoch mit oberem Abschluss 40. In dem oberen Abschluss 40 sind zwei Befestigungsmittel 43 eingebracht, in diesem Falle Schrauben. Diese greifen in die in Fig. 3 gezeigten Aufnahmen 33 im rechten 30 und im linken 31 Teilprofil ein. Somit werden durch den als Kappe 41 ausgebildeten oberen Abschluss 40, unter Zwischenschaltung der Befestigungsmittel 43, die Teilprofile 30, 31 sicher aneinander gehaltert, um den Pfosten 12 zu bilden.

Weiterhin erkennt man, dass im Gegensatz zu dem in Fig. 3 gezeigten Bereich in Fig. 4 die beiden Module 10 von der Grundfläche her nicht rechteckig ausgebildet sind. Trotzdem ist der Pfosten 12 mit den beiden Teilprofilen 30, 31 identisch zu dem in Fig. 3 ausgebildet. Der einzige Unterschied zwischen den beiden Pfosten 12 aus Fig. 3 und Fig. 4 besteht in der Anordnung der Scharniere 21, 23 für die Tür 13. Wie in Fig. 4 gezeigt, ist an der Kappe 41 ein oberes Scharnierelement 44, hier eine Buchse, angeordnet, während die Tür 13 ein oberes Gegenscharnierelement 20, hier einen Stift, umfasst, wobei das obere Scharnierelement 44 mit dem oberen Gegenscharnierelement 20 das obere Scharnier 21 bildet. Über dieses Scharnier 21 ist die Tür 13 im oberen Bereich 24 des Moduls 10 angelenkt.

Vergleicht man jetzt die Lage des oberen Scharnierelements 44 aus Fig. 4 mit der Lage des oberen Gegenscharnierelements 20 aus Fig. 3, so wird klar, dass das obere Scharnier 21 in Bezug auf den Pfosten 12 an einer anderen Stelle angeordnet ist. Dies hängt damit zusammen, dass in Fig. 3 zwei Module 10 gezeigt sind, welche über eine rechteckige Grundfläche verfügen, während die beiden Module 10 aus Fig. 4 keine rechteckigen Grundflächen aufweisen. Um jedoch identische Teilprofile 30, 31 und identische Türen 13 verwenden zu können, wird lediglich die Form des oberen Abschlusses 40 dergestalt verändert, dass das obere Scharnier 21 an anderer Stelle angeordnet wird. Hierdurch erreicht man die maximale Flexibilität und Modularität des vorliegenden Systems und spart darüber hinaus Kosten, da viele Bauteile identisch zueinander sind.

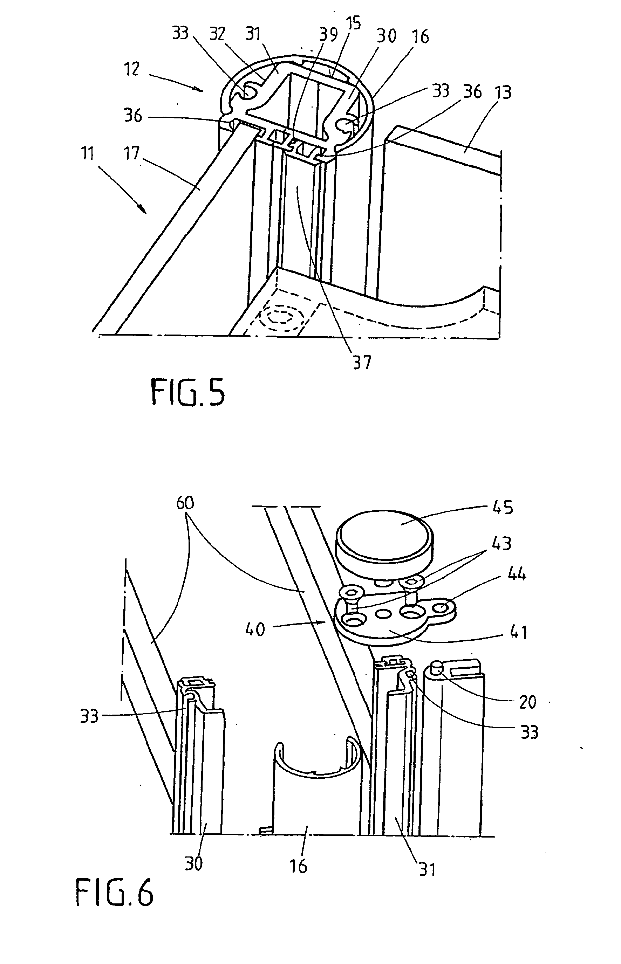

Fig. 5 zeigt nunmehr einen Pfosten 12 ohne oberen Abschluss 40 an einem letzten Modul 10 einer Thekenlandschaft. Auch dieser Pfosten 12 weist zwei Teilprofile 30, 31 auf, die in bereits bekannter und beschriebener Weise zusammengebaut sind. Auch eine Verkleidung 17 ist vorgesehen, die den Pfosten 12 auf seiner Außenseite 15 abdeckt. Außerdem verfügen die beiden Teilprofile 30, 31, wie bereits bekannt über Profilnuten 36. Während jedoch die eine Profilnut 36 ein Abdeckprofil 37 aufweist, ist in die andere Profilnut 36 eine Trennscheibe 17 eingebracht. Diese bildet einen optischen und physikalischen Abschluss des äußeren Moduls 10 der Thekenlandschaft.

Wird die Trennscheibe 17 zwischen zwei Modulen 10 angeordnet, so kann sie an gleicher Stelle in die Profilnut 36 eingebracht werden oder auch im Kontaktbereich 38 der beiden Teilprofile 30, 31 angeordnet sein. In diesem Fall können dann beide Profilnuten 36 mit entsprechenden Abdeckprofilen 37 ausgestattet sein.

Einen Überblick über die generell verwendeten Bauteile eines Pfostens 12 bzw. zweier Module 10 zeigt Fig. 6. Es sind die beiden Teilprofile 30, 31 vorgesehen, die zusammen den Pfosten 12 ergeben. Darüber hinaus gibt es den oberen Abschluss 40 der dafür sorgt, die beiden Teilprofile 30, 31 aneinander zu haltern. Dies geschieht mittels zweier Befestigungsmittel 43, hier als Schrauben ausgebildet. Des Weiteren sind ein oberes Scharnierelement 44 und ein oberes Gegenscharnierelement 20 vorgesehen, um ein oberes Scharnier 21 zu bilden, an welchem die Tür 13 schwenkbar gelagert ist. Darüber hinaus ist an jedem der beiden Teilprofile 30, 31 jeweils ein Zwischenträger 60 vorgesehen, an welchem beispielsweise ein Möbelelement 18 angeordnet werden kann. Der obere Abschluss 40 kann mit einem Zierelement 45 versehen werden, um einen gewünschten optischen Gesamteindruck des Moduls 10 zu erzielen, bzw. dieses zu verzieren. Das rechte Teilprofil 30 gehört dabei zu einem ersten Modul 10, während das linke Teilprofil 31 bereits zu einem zweiten Modul 10 gehört. Sind beide Teilprofile 30, 31 zu dem Pfosten 12 verbunden, so bilden die beiden Module 10 bereits einen Teil der gewünschten Thekenlandschaft. Außerdem kann der Pfosten 12 im Bereich seiner Außenseite 15 noch mit der Verkleidung 16 versehen sein.

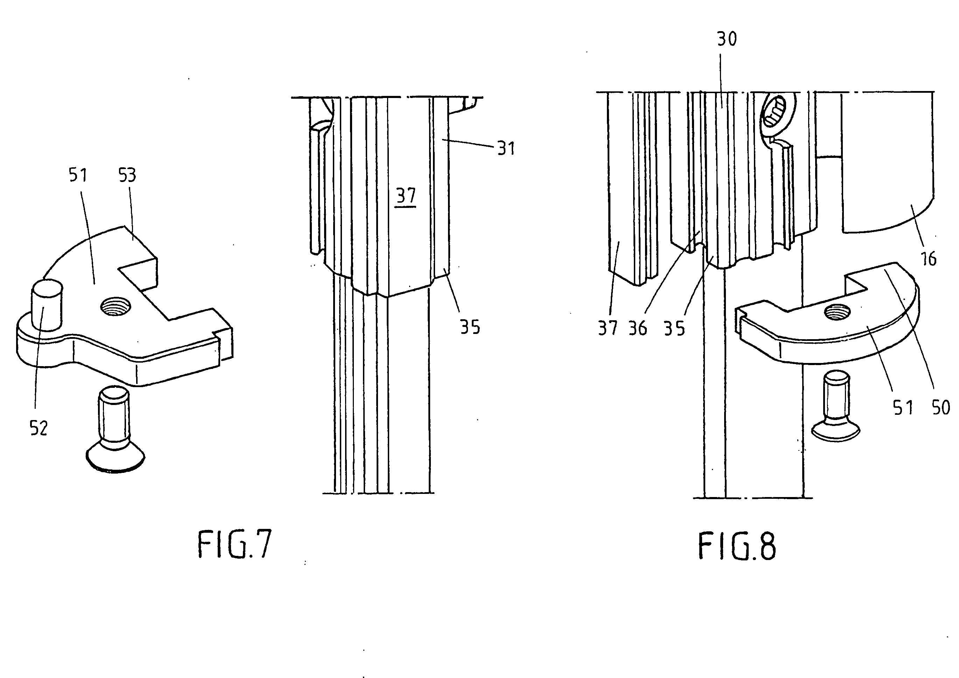

Den Aufbau der unteren halben Abschlüsse 50 an den beiden Teilprofilen 30, 31 zeigen die Fig. 7 und 8. Jeder der beiden unteren halben Abschlüsse 50 ist dabei als Halbrosette 51 ausgebildet. Jede Halbrosette 51 wird am unteren Ende 35 des jeweiligen Teilprofils 30, 31 angeordnet und dort befestigt, beispielsweise mittels einer Schraube. Andere Befestigungsarten, wie eine Clipsverbindung, Nieten, Verschweißen oder Ähnliches sind selbstverständlich ebenfalls denkbar. Werden die beiden Teilprofile 30, 31 zusammengebracht, so ergeben die beiden Halbrosetten 51 eine vollständige Rosette, so dass sich ein vorteilhafter optischer Gesamteindruck des Pfostens ergibt.

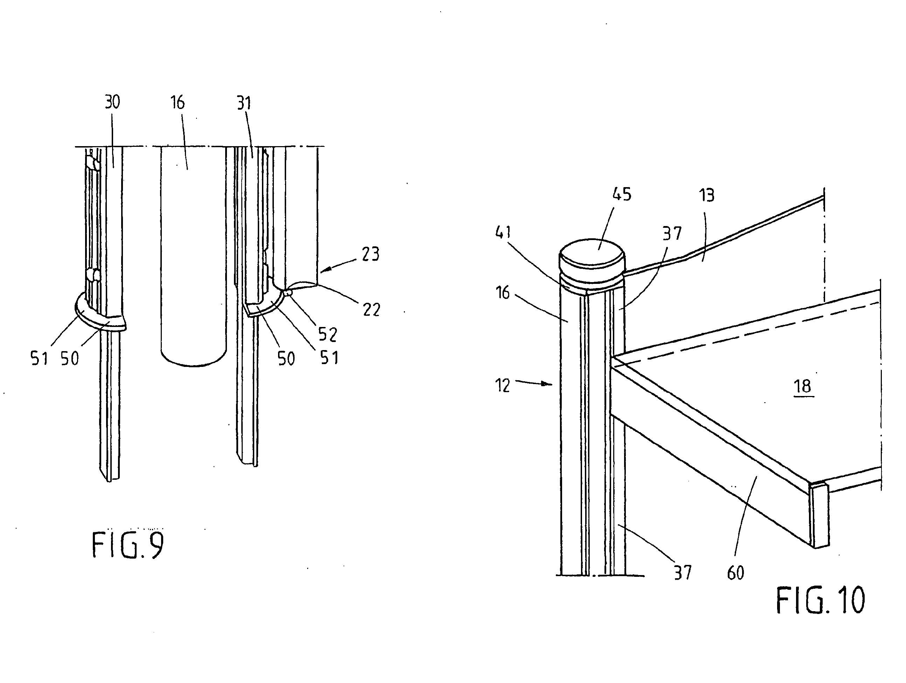

Im Bereich des linken unteren halben Abschlusses 50 ist ein unteres Scharnierelement 52 vorgesehen, hier ein Stift. Wie aus Fig. 9 ersichtlich, ist an einer zugehörigen Tür 13 ein unteres Gegenscharnierelement 22, in diesem Fall eine Buchse, vorgesehen. Das untere Scharnierelement 52 und das untere Gegenscharnierelement 22 bilden zusammen ein unteres Scharnier 23, an welchem die Tür 13 schwenkbeweglich gelagert ist. Insgesamt ist es für die Modularität und Kompatibilität des Systems vorteilhaft, wenn die Scharniere 21, 23 nur an einer Art von Teilprofilen 31, 31 angeordnet werden, also nur an rechten 30 oder linken Teilprofilen 31.

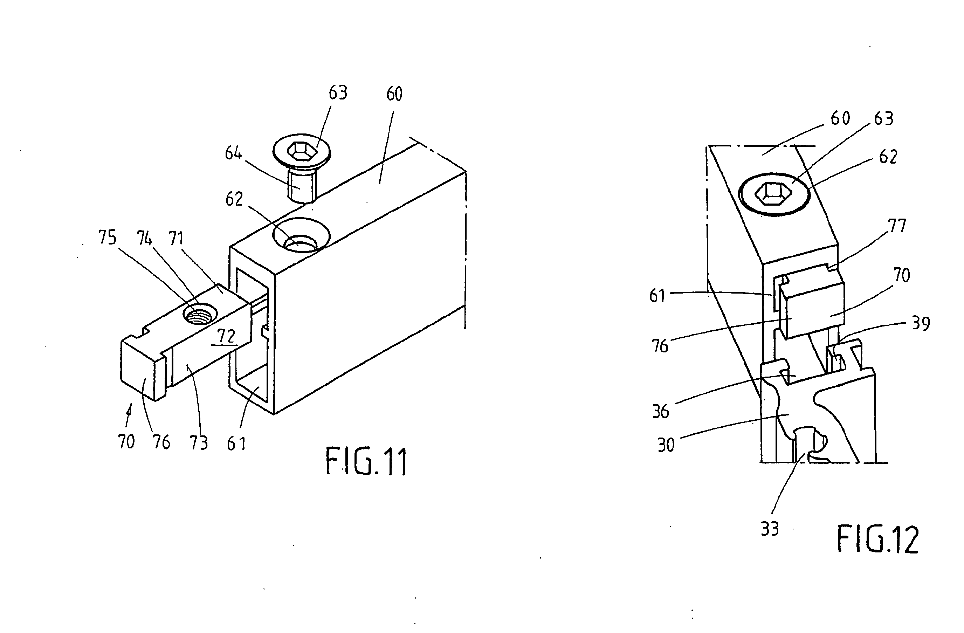

Die Fig. 10 bis 13 zeigen in welcher Art ein Zwischenträger 60 an einem Teilprofil 30, 31 halterbar und befestigbar ist. Die Zwischenträger 60 dienen dazu, ein Möbelelement 18 aufzunehmen, wie etwa einen Regalboden, eine Zahlplatte oder Ähnliches. Hierbei ist jeder Zwischenträger 60 über einen Klemmhalter 70, insbesondere an der hinterschnittenen 39 Profilnut 36 eines Teilprofils 30, 31, halterbar. Wie aus Fig. 11 ersichtlich, verfügt der Zwischenträger 60 über eine Öffnung 61, in die ein Klemmhalter 70 mit seinem einen Ende 71 hereinführbar ist. An der Außenseite 72 des Klemmhalters 70 im Bereich seines einen Endes 71 ist dabei eine Führungsfläche 73 vorgesehen, welche beim Einbringen des Klemmhalters 70 mit der Öffnung 61 im Zwischenträger 60 zusammenwirkt.

Der Klemmhalter 70 verfügt über eine erste Ausnehmung 74, die mit einem Gewinde 75 versehen ist. Diese erste Ausnehmung 74 befindet sich an dem einen Ende 71 des Klemmhalters 70. Der Zwischenträger 60 weist im Bereich seiner Öffnung 61 eine zweite Ausnehmung 62 auf. Ist der Klemmhalter 70 in die Öffnung 61 des Zwischenträgers 60 eingeführt, so ist die erste Ausnehmung 74 leicht exzentrisch zur zweiten Ausnehmung 62 angeordnet. Das andere Ende 76 des Klemmhalters 70 ist hinterschnitten 77 ausgebildet und kann in die Profilnut 36 eines Teilprofils 30, 31 eingebracht werden. Der hinterschnittene Bereich 77 des Klemmhalters 70 ist dabei im hinterschnittenen Bereich 39 der Profilnut 36 halterbar.

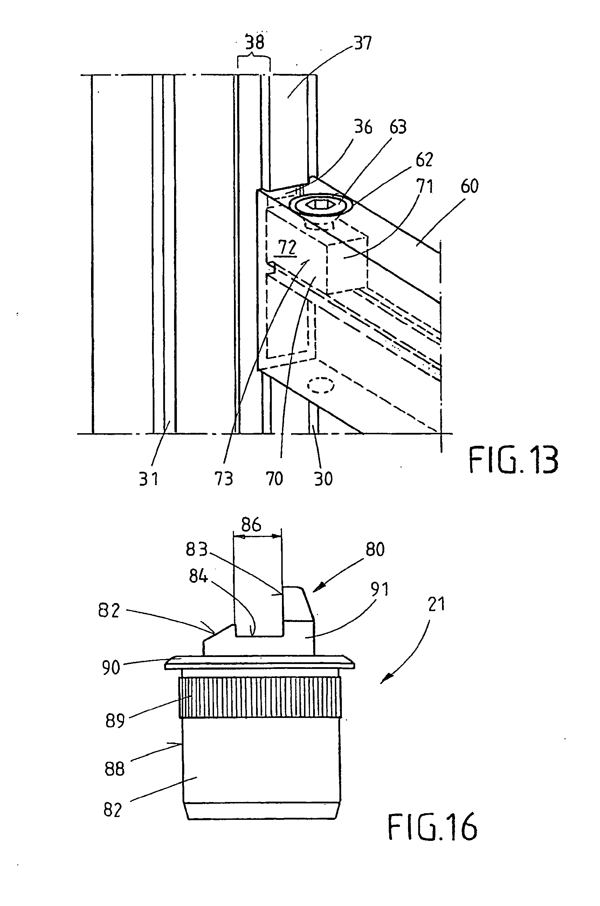

Ein Gewindebolzen 63, im vorliegenden Fall eine Schraube, die über ein zweites Gewinde 64 verfügt, kann dann durch die zweite Ausnehmung 62 geführt werden und mit ihrem Gewinde 64 mit dem ersten Gewinde 75 in der ersten Ausnehmung 74 im Klemmhalter 70 in Eingriff gebracht werden. Geschieht dies, verklemmt sich das andere Ende 76 des Klemmhalters 70 in der Profilnut 36 des Teilprofils 30, 31, vorzugsweise unter Zwischenschaltung des Zwischenträgers 60. Hierbei entsteht dann die in Fig. 13 gezeigte Situation. Die nicht von dem Klemmhalter 70 belegten Bereiche der Profilnut 36 können ihrerseits wieder mit entsprechenden Abdeckprofilen 37 versehen werden, um einen einheitlich optischen Gesamteindruck zu vermitteln.

Wird im Modul 10 eine Tür 13 verwendet, so soll insbesondere bei Verwendung des Thekensystems in einem Ladengeschäft oder Ähnlichem sichergestellt werden, dass die Tür 13 in einer definierten Endposition 13.1 gehaltert werden kann. Hierdurch werden Unfälle bzw. Beschädigungen der in dem Modul 13 befindlichen Waren, durch unbeabsichtigt sich verschwenkende Türen 13 vermieden. Um die Tür 13 in einer definierten Endposition 13.1 zu halten, ist ein Anschlag 80 vorgesehen. Vorzugsweise handelt es sich bei der Tür 13 um eine durchsichtige Tür 13, wie beispielsweise eine Glastür.

Um den Anschlag 80 sicher und gut zu konzipieren, ist der Anschlag 80 als Anschlagknopf 81 ausgebildet. Weiterhin ist eine Schrägfläche 82 vorgesehen, über die die Tür 13 bei Einbringen in ihre Endposition 13.1 führbar ist. Der Kopf 91 des Anschlagknopfes 80 weicht dabei dem unteren Ende 19 der Tür 13 aus. Weiterhin umfasst der Anschlagknopf 81 eine Türanlagefläche 83, an der die Tür 13 in ihrer Endposition 13.1 flächig zur Anlage kommt. Außerdem ist eine Türauflage 84 vorgesehen, welche sich vorzugsweise in einer Nut 86 im Kopf 91 befindet und an der das untere Ende 19 der Tür 13 angeordnet ist, wenn sich diese in ihrer Endposition 13.1 befindet. Der Anschlagknopf 81 ist federbelastet 85, wobei die Feder 85 versucht, den Anschlagknopf 81 mit seiner Türauflage 84 gegen das untere Ende 19 der Tür 13 zu bewegen. Um die Tür 13 dann aus ihrer Endposition 13.1 herauszubewegen, muss der Anschlagknopf 81 entgegen der Kraft der Feder 85 manuell betätigt werden. So kann auch kein versehentliches Öffnen der Tür 13 erfolgen, falls eine Person zufällig gegen die Tür 13 stößt.

Wie insbesondere aus Fig. 16 erkennbar ist, umfasst der Anschlagknopf 81 ein Gehäuse 87, mittels welchem er in einem Korpus 14 des Moduls 10 angeordnet ist. An seinem äußeren Umfangsbereich 88 weist das Gehäuse 87 dabei eine Rändelung 89 auf, die für einen sicheren, unverdrehbaren Sitz des Gehäuses 87 im Korpus 14 sorgt. Diese Rändelung ist einfach und preiswert an dem Gehäuse 87 anzuordnen. Sie sorgt darüber hinaus dafür, dass das Gehäuse 87 fest im Korpus 14 sitzt und nicht versehentlich herausrutschen kann. Vorzugsweise ist noch ein Teller 90 an dem Gehäuse 87 vorgesehen, der als obere Anlagefläche des Gehäuses 87 auf dem Korpus 14 dient.

Besonders bevorzugt ist es, den Kopf 91 bzw. den Anschlag 80 drehbar zu lagern, insbesondere drehbar in dem Gehäuse 87 zu lagern. Wird dann die Tür 13 in ihre Endposition 13.1 verbracht, so richtet sich der Anschlag 80 bzw. der Kopf 91 mit seiner Türanlagefläche 83 so aus, dass die Tür 13 in ihrer Endposition 13.1 flächig an der Türanlagefläche 83 zur Anlage kommt.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich. So kann die Form der Teilprofile anders ausgebildet sein. Auch die Module müssen keine viereckige Grundfläche aufweisen, auch andere, insbesondere polygone Formen, wie fünfeckig oder sechseckig, sind möglich.

### Bezugszeichenliste:

- 10: Modul
- 11: Seite von 10
- 12: Pfosten
- 13: Tür
- 13.1: Endposition von 13
- 14: Korpus von 10
- 15: Außenseite von 12
- 16: Verkleidung
- 17: Trennscheibe
- 18: Möbelelement
- 19: Unteres Ende von 13
- 20: Oberes Gegenscharnierelement
- 21: Oberes Scharnier
- 22: Unteres Gegenscharnierelement
- 23: Unteres Scharnier
- 24: Oberer Bereich von 10
- 25: Unterer Bereich von 10
- 30: Rechtes Teilprofil
- 31: Linkes Teilprofil
- 32: Bauteil von 30, 31
- 33: Aufnahme
- 34: Oberes Ende von 30, 31
- 35: Unteres Ende von 30, 31
- 36: Profilnut
- 37: Abdeckprofil
- 38: Kontaktbereich von 30, 31
- 39: Hinterschnittener Bereich an 36
- 40: Oberer Abschluss
- 41: Kappe
- 43: Befestigungsmittel
- 44: Oberes Scharnierelement
- 45: Zierelement
- 50: Unterer halber Abschluss
- 51: Halbrosette
- 52: Unteres Scharnierelement
- 60: Zwischenträger
- 61: Öffnung in 60
- 62: Zweite Ausnehmung
- 63: Gewindebolzen
- 64: Zweites Gewinde an 63
- 70: Klemmhalter
- 71: Eines Ende von 70
- 72: Außenseite von 70
- 73: Führungsfläche
- 74: Erste Ausnehmung
- 75: Erstes Gewinde an 74
- 76: Anderes Ende von 70
- 77: Hinterschnittener Bereich an 70
- 80: Anschlag
- 81: Anschlagknopf
- 82: Schrägfläche
- 83: Türanlagefläche
- 84: Türauflage
- 85: Feder
- 86: Nut
- 87: Gehäuse
- 88: Umfangsbereich von 87
- 89: Rändelung
- 90: Teller
- 91: Kopf von 81

## Patentansprüche

1. System zum modularen Aufbau von Theken, insbesondere Verkaufstheken,
mit wenigstens zwei Modulen (10), aus welchen die Theke aufgebaut ist, wobei an beiden Seiten (11) jedes Moduls (10) je ein Pfosten (12) angeordnet ist, der Bauteile des Moduls (10), wie Möbelelemente (18), tragen kann und/oder das Modul (10) definiert
wobei jeder Pfosten (12) aus wenigstens zwei Teilprofilen (30, 31), nämlich einem rechten (30) und einem linken Teilprofil (31), besteht, welche zusammenbringbar sind, und so eine optische Einheit bilden, wobei zueinander in Form, Größe oder Grundfläche verschiedene Module (10) gleiche Teilprofile (30, 31) aufweisen
und wobei alle rechten (30) und alle linken (31) Teilprofile identisch zueinander sind und vorzugsweise spiegelverkehrt zueinander eingebaut werden, wobei jeder Pfosten (12) in dem System die gleiche Dicke aufweist, unabhängig von der Form und Größe der verwendeten Module (10), **dadurch gekennzeichnet, dass** die Teilprofile (30, 31) an ihrem oberen Ende (34) über wenigstens einen oberen Abschluss (40) aneinander festlegbar sind.

2. System nach Anspruch 1, **dadurch gekennzeichnet, dass** als oberer Abschluss (40) eine Kappe (41) dient, an welcher Eingriffsmittel angeordnet sind, die mit ein oder mehreren Bauteilen (32) jedes der beiden Teilprofile (30, 31) in Eingriff bringbar sind und/oder an welcher Befestigungsmittel (43) anordnenbar sind, die mit ein oder mehreren Aufnahmen (33) jedes der beiden Teilprofile (30, 31) in Wirkverbindung bringbar sind, wobei der obere Abschluss (40) vorzugsweise noch ein oder mehrere Zierelemente (45) umfasst.

3. System nach einem der Ansprüche 1 oder 2, **dadurch gekennzeichnet, dass** der obere Abschluss (40) wenigstens ein oberes Scharnierelement (44) wie einen Stift oder eine Buchse umfasst, wobei eine Tür (13) vorgesehen ist, die ein oberes Gegenscharnierelement (20) wie eine Buchse oder einen Stift umfasst und wobei das obere Scharnierelement (44) und das obere Gegenscharnierelement (20) in Wirkverbindung bringbar sind, um ein oberes Scharnier (21) zu bilden und so die Tür (13) im oberen Bereich (24) des Moduls (10) schwenkbar anzuordnen.

4. System nach einem der Ansprüche 1 bis 3, **dadurch gekennzeichnet, dass** jedes Teilprofil (30, 31) an seinem unteren Ende (34) einen unteren halben Abschluss (50) in Form einer Halbrosette (51) aufweist, die an einem Korpus (14) des Moduls (10) oder an einem Boden befestigbar ist,
wobei die beiden Halbrosetten (51) im eingebauten Zustand eine ganze Rosette bilden,
wobei vorzugsweise wenigstens eine der Halbrosetten (51) mit einem unteren Scharnierelement (52), wie einem Stift oder einer Buchse, versehen ist wobei eine Tür (13) vorgesehen ist, die ein unteres Gegenscharnierelement (22), wie eine Buchse oder einen Stift, aufweist
und wobei das untere Scharnierelement (52) und das untere Gegenscharnierelement (22) miteinander in Wirkverbindung bringbar sind, um ein unteres Scharnier (23) zu bilden und so die Tür (13) im unteren Bereich (25) des Moduls (10) schwenkbar anzuordnen.

5. System nach einem der Ansprüche 3 oder 4, **dadurch gekennzeichnet, dass** die oberen (44) und unteren Scharnierelemente (52) am oberen Abschluss (40) bzw. unteren halben Abschluss (50) an unterschiedlichen Stellen in Bezug auf den Pfosten (12) angeordnet sind, je nach der Form des Moduls (10).

6. System nach einem der Ansprüche 1 bis 5, **dadurch gekennzeichnet, dass** die Teilprofile (30, 31) über je wenigstens eine Profilnut (36) verfügen, welche zumindest bereichsweise mit einem Abdeckprofil (37) verschließbar ist.

7. System nach einem der Ansprüche 1 bis 6, **dadurch gekennzeichnet, dass** an jedem der Teilprofile (30, 31) ein oder mehrere Zwischenträger (60) anbringbar sind, auf welchen ein Möbelelement (18), wie ein Regalboden, eine Zahlplatte o.ä. halterbar ist, wobei die Zwischenträger (60) über Klemmhalter (70) an den Teilprofilen (30, 31), insbesondere in einer hinterschnittenen (39) Profilnut (36) halterbar sind.

8. System nach Anspruch 7, **dadurch gekennzeichnet, dass** der Klemmhalter (70) mit seinem einen Ende (71) in eine Öffnung (61) des Zwischenträgers (60) einbringbar ist, wobei die Außenseite (72) des Klemmhalters (70) im Bereich des einen Endes (71) zumindest bereichsweise als Führungsfläche (73) dient,
dass eine erste Ausnehmung (74), die über ein erstes Gewinde (75) verfügt, am einen Ende (71) des Klemmhalters (70) vorgesehen ist, während der Zwischenträger (60) im Bereich seiner Öffnung (61) über eine zweite Ausnehmung (62) verfügt, wobei die erste Ausnehmung (74) exzentrisch zu der zweiten Ausnehmung (62) angeordnet ist,
dass der Klemmhalter (70) mit seinem anderen Ende (76) in eine Profilnut (36) des Teilprofils (30, 31) einbringbar ist, wobei das andere Ende (76) des Klemmhalters (70) vorzugsweise hinterschnitten (77) ist, so dass er in dem hinterschnittenen Bereich (39) der Profilnut (36) des Teilprofils (30, 31) halterbar ist,
und dass ein Gewindebolzen (63), wie eine Schraube od. dgl., vorgesehen ist, der über ein zweites Gewinde (64) verfügt und welcher durch die zweite Ausnehmung (62) führbar ist und mit seinem Gewinde (64) mit dem ersten Gewinde (75) in der ersten Ausnehmung (74) in Eingriff bringbar ist, wobei sich das andere Ende (76) des Klemmhalters (70) vorzugsweise unter Zwischenschaltung des Zwischenträgers (60) in der Profilnut (36) verklemmt.

9. System nach einem der Ansprüche 1 bis 8, **dadurch gekennzeichnet, dass** das Modul (10) eine Tür (13) aufweist, insbesondere eine Glastür, wobei ein Anschlag (80) vorgesehen ist, um die Tür (13) in einer definierten Endposition (13.1) zu haltern.

10. System nach Anspruch 9, **dadurch gekennzeichnet, dass** der Anschlag (80) als Anschlagknopf (81) ausgebildet ist, der eine Schrägfläche (82) umfasst, über die die Tür (13) beim Einbringen in ihre Endposition (13.1) führbar ist,
weiterhin eine Türanlagefläche (83) umfasst, an der die Tür (13) in ihrer Endposition (13.1) zu Anlage kommt
und eine Türauflage (84), welche sich vorzugsweise in einer Nut (86) im Kopf (91) befindet und an der in der Endposition (13.1) das untere Ende (19) der Tür (13) angeordnet ist,
wobei der Anschlagknopf (81) federbelastet (85) ist und die Feder (85) versucht den Anschlagknopf (81) mit seiner Türauflage (84) gegen das untere Ende (19) der Tür (13) zu bewegen,
wobei weiterhin vorzugsweise die Tür (13) nur durch manuelle Betätigung des Anschlagknopfes (81) entgegen der Kraft der Feder (85) aus ihrer Endposition (13.1) heraus bewegbar ist.

11. System nach Anspruch 10, **dadurch gekennzeichnet, dass** der Anschlagknopf (81) ein Gehäuse (87) aufweist, mittels welchem er in einem Korpus (14) des Moduls (10) angeordnet ist, wobei das Gehäuse (87) an seinem Umfangsbereich (88) eine Rändelung (89) aufweist, die für einen sicheren Sitz des Gehäuses (87) im Korpus (14) sorgt und wobei das Gehäuse (87) vorzugsweise noch einen Teller (90) besitzt, welcher als obere Anlagefläche des Gehäuses (87) auf dem Korpus (14) dient.

12. System nach einem der Ansprüche 9 bis 11, **dadurch gekennzeichnet, dass** der Anschlag (80) bzw. der Kopf (91) drehbar im Korpus (14) oder im Gehäuse (87) gelagert ist und sich selbsttätig so ausrichtet, dass die Tür (13) in ihrer Endposition (13.1) an der Türanlagefläche (83) flächig zur Anlage kommt.

13. System nach einem der Ansprüche 1 bis 12, **dadurch gekennzeichnet, dass** jeder der Pfosten (12) zumindest auf seiner Außenseite (15) mit einer Verkleidung (16) abdeckbar ist.

14. System nach einem der Ansprüche 1 bis 13, **dadurch gekennzeichnet, dass** zwischen zwei Modulen (10) und/oder am letzten Modul (10) der Theke eine Trennscheibe (17) einbringbar ist, die sowohl im Kontaktbereich (38) der beiden Teilprofile (30, 31) als auch im Bereich einer Profilnut (36) eines Teilprofils (30, 31) angeordnet sein kann.

## Claims

1. System for the modular construction of counters, in particular sales counters,
with a minimum of two modules (10), from which the counter is constructed,
whereby, a post (12) is arranged on both sides (11) of each module (10) that can support the components of the module (10), such as furniture elements (18) and/or the module (10) defined
whereby each post (12) consists of a minimum of two subprofiles (30, 31), namely a right (30) and a left subprofile (31) which can be united and, thus, form an optical unit,
whereby, together they present the same subprofiles (30, 31) in shape, size or base area of different modules (10)
and whereby, all right (30) and left (31) subprofiles are identical to one another and primarily installed mirror-image to one another, whereby each post (12) in the system is the same thickness, independent of the shape and size of the modules (10) used
is **characterized by**
whereby, the subprofiles (30, 31) are configurable together at their upper end (34) by a minimum of one closure (40).

2. System in accordance with claim 1, **characterized in that** the top closure (40) is a cap (41), on which means of engagement are arranged, that can be engaged with each of the subprofiles (30, 31) with one or more components (32) and/or attachment elements (43) are arranged, that can be installed as an operative connection to each of the two subprofiles (30, 31) by one or more mountings (33) whereby, the top closure (40) primarily includes one or more ornate elements (45).

3. System in accordance with claim 1 or 2, **characterized in that** the top closure (40) includes a minimum of one lower hinge element (44), such as a pin or socket whereby, a door (13) is provided that includes an upper opposite hinge element (20), such as a pin or socket and whereby, the upper hinge element (44) and top opposite hinge element (20) are an operative connection in order to form an upper hinge (21) and, thus, to arrange the door (13) in the upper area (24) of the module (10) to be pivoted.

4. System in accordance with claims 1 to 3, **characterized in that** each subprofile (30, 31) features a lower semi-closure (50) at its lower end (34) in the form of a semi-rosette (51) that can be attached to a body (14) of the module (10) or a floor,
whereby, both halves of the semi-rosette (51) form a complete rosette when installed,
whereby, primarily one of the semi-rosettes (51) has a lower hinge element (52), such as a pin or socket, whereby a door (13) is provided that features a lower opposite hinge element (22), such as a pin or socket
and whereby, the lower hinge element (52) and the lower opposite hinge element (22) together can be an operative connection to form a hinge (23) and, thus, to arrange the door (13) in the lower area (25) of the module (10) to be pivoted.

5. System in accordance with claims 3 or 4, **characterized in that** the upper (44) and lower hinge elements (52) are arranged at the top closure (40) and the bottom semi-closure (50) at different positions in relation to the post (12), depending on the shape of the module (10).

6. System in accordance with claims 1 to 5, **characterized in that** the subprofiles (30, 31) have a minimum of one profile groove (36), which can be at least partly closed by a cover profile (37).

7. System in accordance with claims 1 to 6, **characterized in that** one or more intermediate supports (60) can be attached to each subprofile (30, 31) onto which a furniture element (18), such as a shelf, top shelf or similar, can be attached, whereby the intermediate support (60) can be attached by a clamp mounting (70) to the subprofiles (30, 31), in particular in a recessed (39) profile groove (36).

8. System in accordance with claim 7, **characterized in that** the clamp mounting (70) can be attached at one end (71) into an aperture (61) of the intermediate support (60), whereby the outside (72) of the clamp mounting (70) in the area of the one end (71) at least partly serves as a guide surface (73),
that a first recess (74), which has a first thread (75), is provided at one end (71) of the clamp mounting (70), whilst the intermediate support (60) has a second recess (62) in the area of its aperture (61), whereby the first recess (74) is arranged eccentric to the second recess (62),
that the other end (76) of the clamp mounting (70) can be inserted into a profile groove (36) of the subprofile (30, 31), whereby the other end (76) of the clamp mounting (70) is preferably recessed (77), so that it can be attached in the recessed area (39) the profile groove (36) of the subprofile (30, 31),
and that a stud bolt (63), such as a screw or similar, is provided which has a second thread (64) and which can be inserted through the second recess (62) and can be engaged with its thread (64) to the first thread (75) in the first recess (74), whereby the other end (76) of the clamp mounting (70) is primarily jammed in the profile groove (36) by the intermediate bracket of the intermediate support (60).

9. System in accordance with claims 1 to 8, **characterized in that** the module (10) features a door (13), in particular a glass door, whereby a stop (80) is provided, to retain the door (13) in a defined end position (13.1).

10. System in accordance with claim 9, **characterized in that** the stop (80) is formed as a stop button (81), which includes an inclined surface (82), over which the door (13) can be guided to its end position (13.1),
which also includes a door contact surface (83), on which the door (13) comes to rest in its end position (13.1)
and a door overlay (84), preferably located in a groove (86) in the head (91) and is arranged at the lower end (19) of the door (13) when it is in the end position (13.1),
whereby, the stop button (81) is spring loaded (85) and the spring (85) attempts to move the stop button (81), with its door overlay (84), against the lower end (19) of the door (13),
whereby, the door (13) can primarily only be moved out of its end position (13.1) by manual activation of the stop button (81) against the force of the spring (85).

11. System in accordance with claim 10, **characterized in that** the stop button (81) features a housing (87), by which it is arranged in a body (14) of the module (10), whereby the housing (87) features knurling (89) at its circumference (88) which provides secure seating of the housing (87) in the body (14) and whereby the housing (87) preferably has another disc (90) which serves as the upper contact surface of the housing (87) on the body (14).

12. System in accordance with claims 9 to 11, **characterized in that** the stop (80) and the head (91) is mounted in the body (14) or housing (87) and automatically aligns itself so that the door (13) comes to rest at its end position (13.1) flush with the door contact surface (83).

13. System in accordance with claims 1 to 12, **characterized in that** each of the posts (12) can be covered at least on the outside (15) by a panel (16).

14. System in accordance with claims 1 to 13, **characterized in that** a partition (17) can be introduced between two modules (10) and/or at the last module (10) of the counter which can be arranged in the contact area (38) of both subprofiles (30, 31) as well as in the area of a profile groove (36) of a subprofile (30, 31).

## Revendications

1. Système d'assemblage modulaire de présentoirs, notamment de présentoirs de vente,
comprenant au moins deux modules (10) à partir desquels le présentoir est construit,
sachant que des deux côtés (11) de chaque module (10) est agencé un montant (12) qui peut supporter des composants du module (10) tels que des éléments (18) de meuble et/ou qui définit le module (10),
sachant que chaque montant (12) se compose d'au moins deux profilés partiels (30, 31), à savoir un profilé partiel droit (30) et un homologue gauche (31) qu'il est possible d'assembler pour former ainsi une unité optique,
sachant que différents modules (10) présentent des profilés partiels identiques (30, 31) entre eux quant à la forme, la taille et la surface au sol
et sachant que tous les profilés partiels droits (30) et tous leurs homologues gauches (31) sont identiques entre eux et que leur incorporation a lieu préférentiellement de manière symétrique, sachant que chaque montant (12) composant le système présente la même épaisseur, indépendamment de la forme et d la taille des modules (10) utilisés,
**caractérisé en ce que** les profilés partiels (30, 31) sont immobilisables les uns contre les autres en leur extrémité supérieure (34) via au moins un raccord supérieur (40).

2. Système selon la revendication 1, **caractérisé en ce qu'**une coiffe (41) sert de terminaison supérieure (40), coiffe contre laquelle sont agencés des moyens d'engrènement qu'il est possible de faire engrener avec un ou plusieurs composants (32) de chacun des deux profilés partiels (30, 31) et/ou contre laquelle il est possible d'agencer des moyens de fixation (43) pouvant être amenés en liaison active avec un ou plusieurs réceptacles (33) de chacun des deux profilés partiels (30, 31), sachant que la terminaison supérieure (40) comprend de préférence en plus un ou plusieurs éléments enjoliveurs (45).

3. Système selon l'une des revendications 1 ou 2, **caractérisé en ce que** la terminaison supérieure (40) comprend au moins un élément charnière supérieur (44) tel qu'une tige ou une douille, sachant qu'est prévue une porte (13) comprenant un élément charnière antagoniste supérieur (20) tel qu'une douille ou une tige, et sachant que l'élément charnière supérieur (44) et l'élément charnière antagoniste supérieur (20) peuvent être amenés en jonction active pour former la charnière antagoniste supérieure (20), ou pour former une charnière supérieure (21) et agencer ainsi la porte (13) dans la zone supérieure (24) du module (10), d'une manière permettant à la porte de pivoter.

4. Système selon l'une des revendications 1 à 3, **caractérisé en ce que** chaque profil partiel (30, 31) présente en son extrémité inférieure (34) une demi-terminaison inférieure (50) en forme de demi-rosace (51) qu'il est possible de fixer contre un corps (14) du module (10) ou contre un fond,
sachant que les deux demi-rosaces (51) forment à l'état incorporé une rosace entière,
sachant que de préférence au moins l'une des demi-rosaces (51) est équipée d'un élément charnière inférieur (52) tel qu'une tige ou une douille, et sachant qu'est prévue une porte (13) présentant un élément charnière antagoniste inférieur (22) tel qu'une douille ou une tige
et sachant que l'élément charnière inférieur (52) et l'élément charnière antagoniste inférieur (22) peuvent être amenés en liaison active l'un avec l'autre pour former une charnière inférieure (23) et agencer ainsi la porte (13), dans la zone inférieure (25) du module (10), d'une manière lui permettant de pivoter.

5. Système selon l'une des revendications 3 ou 4, **caractérisé en ce que** les éléments charnières supérieur (44) et inférieur (52) sont, au niveau de la terminaison supérieure (40) et de la demi-terminaison inférieure (50), agencés à des endroits différents relativement au montant (12), ceci suivant la forme du module (10).

6. Système selon l'une des revendications 1 à 5, **caractérisé en ce que** les profilés partiels (30, 31) disposent chacun d'au moins une rainure profilée (36) qui est obturable au moins localement avec un profilé couvrant (37).

7. Système selon l'une des revendications 1 à 6, **caractérisé en ce qu'**il est possible de monter contre chacun des profilés partiels (30, 31) un ou plusieurs supports intermédiaires (60) permettant de retenir un élément de meuble (18) tel qu'un rayon, une plaque de paiement ou similaire, sachant que les supports intermédiaires (60) peuvent être retenus contre les profilés partiels (30, 31) au moyen de supports de bridage (70), en particulier dans une rainure profilée (36) à contre-dépouille (39).

8. Système selon la revendication 7, **caractérisé en ce qu'**il est possible d'introduire une extrémité (71) du support de bridage (70) dans un orifice (61) du support intermédiaire (60), sachant que le côté extérieur (72) du support de bridage (70) sert de surface de guidage (73) au moins localement dans la zone d'une extrémité (71),
**en ce qu'**un premier évidement (74), qui dispose d'un premier taraudage (75), est prévu à une extrémité (71) du support de bridage (70), tandis que le support intermédiaire (60) dispose d'un deuxième évidement (62) dans la zone de son orifice (61), sachant que le premier évidement (74) est agencé de manière excentrique par rapport au deuxième évidement (62),
**en ce qu'**il est possible d'introduire l'autre extrémité (76) du support de bridage (70) dans une rainure profilée (36) du profilé partiel (30, 31), sachant que l'autre extrémité (76) du support de bridage (70) présente de préférence une contre-dépouille (77) de sorte qu'il est possible de la retenir dans la zone contre-dépouillée (39) de la rainure (36) du profilé partiel (30, 31)
et **en ce qu'**est prévu un goujon fileté (63) tel qu'une vis ou similaire disposant d'un second filetage (64) et qu'il est possible de guider à travers le deuxième évidement (62), filetage (64) qu'il est possible de faire engrener dans le premier taraudage (75) situé dans le premier évidement (74), sachant que l'autre extrémité (76) du support de bridage (70)
se bride dans la rainure profilée (36), de préférence en intercalant le support intermédiaire (60).

9. Système selon l'une des revendications 1 à 8, **caractérisé en ce que** le module (10) présente une porte (13), notamment une porte en verre, sachant qu'est prévue une butée (80) pour retenir la porte (13) dans une position finale définie (13.1).

10. Système selon la revendication 9, **caractérisé en ce que** la butée (80) est configurée en bouton butée (81) comprenant une surface oblique (82) sur laquelle il est possible de faire passer la porte (13) au moment de l'amener sur sa position finale (13.1),
**en ce qu'**elle comprend en outre une surface d'applique (83) contre laquelle la porte (13) vient appliquer une fois qu'elle se trouve sur sa position finale (13.1)
et une garniture (84) de porte qui se trouve de préférence dans une rainure (86) dans la tête (91) et contre laquelle est agencée l'extrémité inférieure (19) de la porte (13) lorsque cette dernière se trouve en position finale (13.1),
sachant que le bouton butée (81) se trouve sous contrainte ressort (85) et que le ressort (85) tente de déplacer le bouton butée (81) avec sa garniture (84) de porte contre l'extrémité inférieure (19) de la porte (13),
sachant qu'en outre la porte (13) n'est déplaçable pour lui faire quitter sa position finale (13.1) que de préférence en actionnant manuellement le bouton butée (81) pour vaincre la force du ressort (85).

11. Système selon la revendication 10, **caractérisé en ce que** le bouton butée (81) présente un boîtier (87) au moyen duquel il est agencé dans un corps (14) du module (10), sachant que le boîtier (87) présente dans sa zone périphérique (88) un moletage (89) veillant à ce que le boîtier (87) soit en assise sûre dans le corps (14) et sachant que le boîtier (87) présente en plus de préférence une rondelle (90) qui sert de surface d'applique supérieure du boîtier (87) sur le corps (14).

12. Système selon l'une des revendications 9 à 11, **caractérisé en ce que** la butée (80) ou la tête (91) est en appui rotatif dans le corps (14) ou dans le boîtier (87) et qu'elle s'aligne automatiquement de sorte que la porte (13) une fois en position finale (13.1) applique par sa surface contre la surface d'applique (83).

13. Système selon l'une des revendications 1 à 12, **caractérisé en ce que** chaque montant (12) est, au moins sur son côté extérieur (15), recouvrable avec un capotage (16).

14. Système selon l'une des revendications 1 à 13, **caractérisé en ce qu'**entre deux modules (10) et/ou contre le dernier module (10) du présentoir, il est possible d'introduire une vitre séparatrice (17) qui peut être agencée aussi bien dans la zone de contact (38) des deux profilés partiels (30, 31) que dans la zone d'une rainure (36) d'un profilé partiel (30, 31).
